# EUROPÄISCHE PATENTSCHRIFT

(11) **EP 0 619 931 B1**
(45) Veröffentlichungstag und Bekanntmachung des Hinweises auf die Patenterteilung: **16.04.1997**
(21) Anmeldenummer: 93902127.5
(22) Anmeldetag: 23.12.1992
(51) Int. Cl.: H04Q 7/22, H04B 7/26

(54) **KOMMUNIKATIONSKANALZUORDNUNG FÜR AN EIN BREITBANDKABEL ANGESCHLOSSENE MOBILE UND STATIONÄRE TEILNEHMER**
COMMUNICATION CHANNEL ALLOCATION FOR MOBILE AND STATIONARY SUBSCRIBERS CONNECTED TO A BROAD-BAND CABLE
ATTRIBUTION DE CANAUX DE COMMUNICATION A DES ABONNES MOBILES ET STATIONNAIRES RACCORDES A UN CABLE A LARGE BANDE

(30) Priorität: 31.12.1991 DE 4143266
(43) Veröffentlichungstag der Anmeldung: 19.10.1994
(73) Patentinhaber: PEITZ GmbH, 80686 München (DE)
(72) Erfinder: PEITZ, Albert, D-8000 München 21 (DE)
(74) Vertreter: Bardehle, Heinz, Dipl.-Ing.
(86) Internationale Anmeldenummer: EP9202987
(87) Internationale Veröffentlichungsnummer: WO9313632

(56) Entgegenhaltungen:
- EP-A- 0 421 602

## Beschreibung

Die Erfindung bezieht sich auf eine Schaltungsanordnung für Fernmeldewählnetze, vorzugsweise Fernsprechwählnetze gemäß dem Oberbegriff des Patentanspruchs 1.

Eine derartige Schaltungsanordnung ist in der DE-A-4 008 790 offenbart.

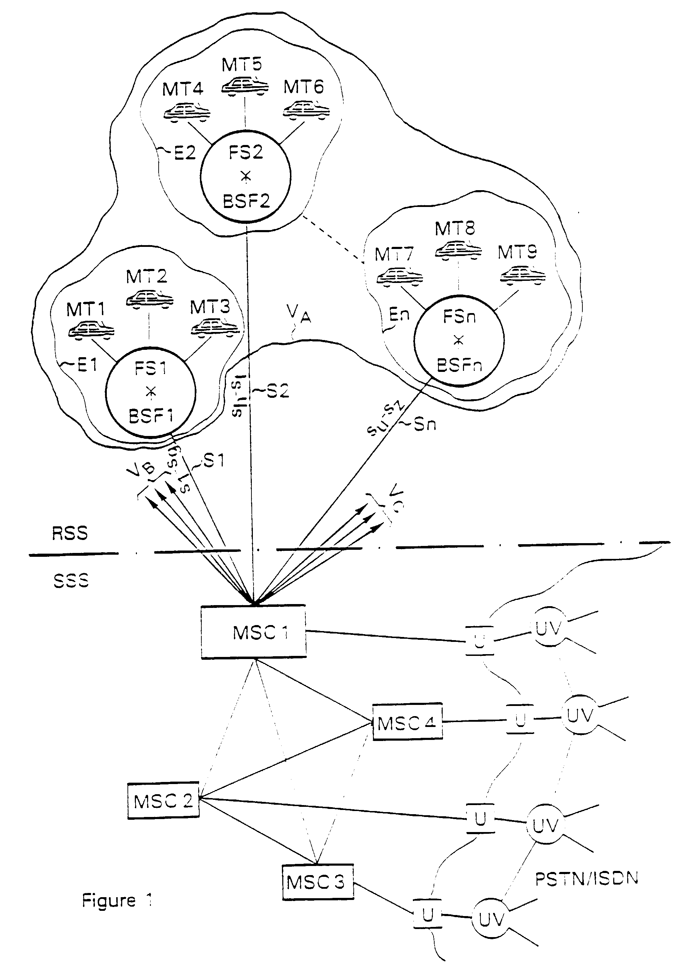

Es handelt sich dabei um ein einheitliches Fernmeldewählnetz mit mobilen und stationärer Teilnehmern, bei dem nur die stationären Teilnehmer über ein Breitbandkabei an eine Vermittlungsstelle angeschlossen sind, während die mobilen Teilnehmer über ihre Funkbasisstationen und getrennte Digitalsignalleitungen an die Vermittlungsstelle angeschlossen sind (siehe Fig. 1). Diese Art des Anschlusses der mobilen Teilnehmer läßt es nicht zu, die den stationären Teilnehmern zugänglichen Kommunikationskanalpaare auch den mobilen Teilnehmern zur Verfügung zu stellen und umgekehrt.

Der Erfindung liegt die Aufgabe zugrunde, die eingangs beschriebene Schaltungsanordnung so zu gestalten, daß eine wirtschaftlichere Nutzung der Kommunikationskanalpaare ermöglicht wird. Erfindungsgemäß geschieht dies durch die Merkmale des Kennzeichen des Patentanspruchs 1.

Die Erfindung ermöglicht den gemeinsamen Anschluß der Funkbasisstationen und der stationären Teilnehmer an ein und dasselbe Breitbandkabel. Hierdurch wird der Vorteil erzielt, sämtliche von der Vermittlungsstelle zur Verfügung gestellten Kommunikationskanalpaare in gleichberechtigter Austauschbarkeit sämtlichen Teilnehmern des mobilen und des stationären Netzes zur Verfügung zu stellen, so daß bei besonderen Verkehrsbelastungen in dem einen oder dem anderen Netz eine entsprechende Aushilfe möglich ist. Man kann nämlich davon ausgehen daß die Verkehrsspitzen im mobilen und im stationären Netz nicht zeitlich zusammenfallen, da z.B. bei der morgendlichen Zufahrt in eine Großstadt sich die Verkehrsspitze auf das mobile Netz konzentriert, während anschließend während der Arbeitszeit im stationären Netz eine Verkehrsspitze entsteht. Da durch den Anschluß sowohl der Funkbasisstationen als auch der stationären Teilnehmer an das Breitbandkabel sämtliche zur Verfügung stehenden Kommunikationskanalpaare sowohl den stationären als auch den mobilen Teilnehmern zugänglich sind, können die Kommunikationskanalpaare gewissermaßen jeweils dort hingeschoben werden, wo sie in größter Zahl benötigt werden. Dies bedeutet, daß man insgesamt mit einer entsprechend geringen Zahl von Kommunikationskanalpaaren auskommt. Die Gestaltung von mobilen und stationären Netzen als einheitliches Netz mit dieser Aushilfemöglichkeit hat es bisher noch nicht gegeben. Darüber hinaus wird durch die Gestaltung des gemeinsamen Übertragungsorgans und der Anordnung von Funkbasisstation-Endgeräten ermöglicht, daß einerseits durch das Übertragungsorgan die von der Vermittlungsstelle zur Verfügung gestellten Kommunikationskanalpaare in relativ niedriger Frequenzlage insgesamt in von dem Breitbandkabel zu übertragende optische Signale umgesetzt werden, wobei den Funkbasisstation-Endgeräten die Aufgabe verbleibt, die Umsetzung der dort ankommenden Kommunikationskanalpaare in die jeweilige Funkbequenz vorzunehmen.

Es ist bisher nur durch die EP-A-0 368 673 bekannt geworden, in einem Mobilfunknetz Kommunikationskanalpaare dadurch einzusparen, daß die einzelnen Funkbasisstationen über Breitbandkabel mit einer zentralen Vermittlungsstelle verbunden werden. Hierdurch wird es möglich, daß sämtliche Funkbasisstationen zu den von einer Vermittlungsstelle zur Verfügung gestellten Kommunikationskanalpaaren Zugang haben.

Mit Einführung der Mobilfunknetze ist die Zahl der Teilnehmer in diesen Netzen und damit der Verkehr, den sie bewältigen müssen, enorm gestiegen und die Zuwachsraten sind unverändert hoch. Andererseits sind die für die Mobilkommunikation verfügbaren und geeigneten Funkfrequenzspektren sehr begrenzt, so daß in der Vergangenheit eine ganze Reihe von Entwicklungen und Maßnahmen ergriffen wurden, um den stark und stetig wachsenden Teilnehmerzahlen und dem Verkehr gerecht zu werden. So hat man z. B. weitere Funkfrequenzbänder (Funkversorgungslayer) erschlossen, die mit heutiger Technik für Funkdialog-Verbindungen geeignet sind. Erwähnt seien hier das 900 MHz-Band mit einem Funkfrequenzspektrum von 2 x 25 MHz (= 1000 Funkkanalpaaren), das 1.8 GHz-Band mit einem Funkfrequenzspektrum von 2 x 75 MHz (= 3000 Funkkanalpaaren) sowie der Mobil-Satelittenfunk und die Telepoint-Technik. Außerdem wurde anstelle der Analog-Technik der Digitale Mobilfunk entwickelt und in der Group Special Mobile (GSM) standardisiert. Die digitale Sprachübertragung über Funk hat eine wesentlich günstigere Wiederverwendbarkeit eines Frequenzspektrums ermöglicht, als bei analogen Systemen, die heute meist im 450 MHz-Band arbeiten.

Die erfindungsgemäße Schaltunganordnung gestattet es, weitere Frequenzbänder, innerhalb deren Funkbasisstationen bedient werden, also die oben erwähnten Funkversorgungslayer, im Sinne der erläuterten Erfindung zu versorgen, nämlich dadurch, daß an das Breitbandkabel mehrere Gruppen von Funkbasisstationen angeschlossen sind, deren Funkkanäle jeweils in unterschiedlichen Frequenzbändern (Funkfrequenzlayer) liegen. Auf diese Weise ergibt sich ein Fernmeldewählnetz, in dem mehrere Funkversorgungslayer einheitlich über ein Breitbandkabel und die mit diesem Breitbandkabel in Verbindung stehende Vermittlungsstelle bedient werden.

Aufgrund des Zugangs seitens aller über die Funkbasisstationen derart mit dem Breitbandkabel in Verbindung stehender mobiler Teilnehmer zu allen Kommunikationskanalpaaren kann je nach Verkehrslage jeder Funkbasisstation und damit jedem von einer Funkbasisstation bedienten Einzugsbereich die jeweils notwendige Zahl von Kommunikationskanalpaaren aus der Gesamtanzahl der in der Vermittlungsstelle bereitgestellten Kommunikationskanalpaare zugeordnet werden, die sich somit in Abhängigkeit von der Verkehrslage entsprechend ändert. Damit kann bei einer Verschiebung des Bedarfs an Kommunikationskanalpaaren von einer Funkbasisstation zu einer anderen Funkbasisstation in der einen Funkbasisstation z.B. die Anzahl der Kommunikationskanalpaare verringert und dafür in der anderen Funkbasisstation die Anzahl der Kommunikationskanalpaare entsprechend erhöht werden. Auf diese Weise läßt sich innerhalb des eine größere Zahl von Funkbasisstationen enthaltenen Versorgungsbereichs ein die Gesamtverkehrslage berücksichtigender Ausgleich der Kommunikationskanalpaare über das gesamte Fernmeldewählnetz erzielen.

Die vorstehend erläuterte erfindungsgemäße Schaltungsanordnung läßt sich hinsichtlich der jeweils zur Verfügung zu stellenden Bandbreite der Funkfrequenzbereiche pro Funkbasisstation verbessern, und zwar dadurch, daß der Vermittlungsstelle eine Steuereinrichtung zugeordnet ist, die aus den allen Funkbasisstationen zur Verfügung stehenden. Funkkanälen die über in den Funkbasisstationen vorgesehene Sende-/Empfangseinrichtungen übertragen werden, ausgewählte Funkkanäle jeweils einer Funkbasisstation zuordnet und diese Zuordnung hinsichtlich Anzahl und jeweiliger Frequenzlage der einzelnen Funkkanäle speichen, wobei die Steuereinrichtung diese Zuordnung wahlweise veränderbar in jeder Funkbasisstation durch Aktivierung der betreffenden Sende-/Empfangseiririchtungen festlegt.

Durch diese Maßnahmen wird erreicht, daß die Schaltungsanordnung an unterschiedliche Verkehrsbelastungen von Funkbasisstation zu Funkbasisstation anpaßbar ist, und zwar durch die Steuereinrichtung die die Zuordnung der Funkkanäle zu den einzelnen Funkbasisstationen wahlweise veränderbar gestaltet, so daß z. B. für die Werktage in Stadtgebieten den betreffenden Funkbasisstationen ein Funkbequenzbereich größerer Bandbreite zugeteilt werden kann, während für die gleiche Zeit in den anderen Gebieten die betreffenden Funkfrequenzbereiche entsprechend eingeengt werden können. Umgekehrt kann dann an Wochenenden und an Feiertagen der Funkfrequenzbereich für die Funkbasisstationen der betreffenden ländlichen Gebiete entsprechend erweitert und für die städtischen Gebieten verringert werden. Dies bedeutet, daß die insgesamt zur Verfügung zu stellende Bandbreite des Funkfrequenzspektrums für alle Funkbasisstationen gegenüber einer festen Zuordnung eines Funkfrequenzbereichs pro Funkbasisstation verringert werden kann.

Die Zuordnung der Funkkanäle zu den Funkbasisstationen und damit die Anpassung der Bandbreite des jeweiligen Funkfrequenzbereiches an die betreffende Verkehrslage läßt sich weiterhin dadurch verbessern, daß die Steuereinrichtung eine die momentane Verkehrsbelastung aller Funkbasisstaionen ermittelnde Verkehrsmeßeinrichtung enthält, die der Steuereinrichtung die Verkehrsbelastung repräsentierende Belastungssignale übermittelt, wobei die Steuereinrichtung bei der Zuordnung der einzelnen Funkkanäle die örtliche Lage der Funkbasisstationen durch Verknüpfung der Belastungssignale mit Interferenzindikatoren, die einander störende Funkkanäle angeben, berücksichtigt.

Hierdurch wird erreicht, daß die momentane Verkehrssituation der zugundeliegenden Funkbasisstationen im gesamten Netz berücksichtigt werden kann, so daß sich über sämtliche Funkbasisstationen eine der jeweiligen Verkehrslage angepaßte Zuordnung an Funkkanälen ergibt. Hierdurch läßt sich eine optimale Ausnutzung der insgesamt zur Verfügung stehenden Bandbreite des Funkfrequenzspektrums erzielen.

In einem derartigen einheitlichen, mobile und stationäre Teilnehmer enthaltenden Netz, in dem alle Teilnehmer funktionell in gleicher Weise zu den zur Verfügung stehenden Kommunikationskanalpaaren Zugang haben, kann man in vorteilhafter Weise die mobilen und die stationären Teilnehmer mit einheitlichen Teilnehmerendgeräten versehen. Diese einheitlichen Teilnehmerendgeräte haben nämlich die gleiche Signalisierung zu verarbeiten, nämlich ihre Kennung auszusenden und das ihnen zugeordnete Kommunikationskanalpaar auszuwählen, so daß in dieser Hinsicht und bezüglich der Kodierung die gleiche Signalverarbeitung zu erfolgen hat. Damit ergibt sich für die Herstellung der Teilnehmerendgeräte wegen deren Einheitlichkeit und großen Zahl eine erhebliche Kostenersparnis und darüberhinaus aufgrund der einheitlichen Signalverarbeitung auch eine große Bedienungsfreundlichkeit. Jeder Teilnehmer eines derartigen Femmeldewählnetzes ist dann nur noch mit den Bedienungselementen der Teilnehmerendgeräte eines Systems konfrontiert.

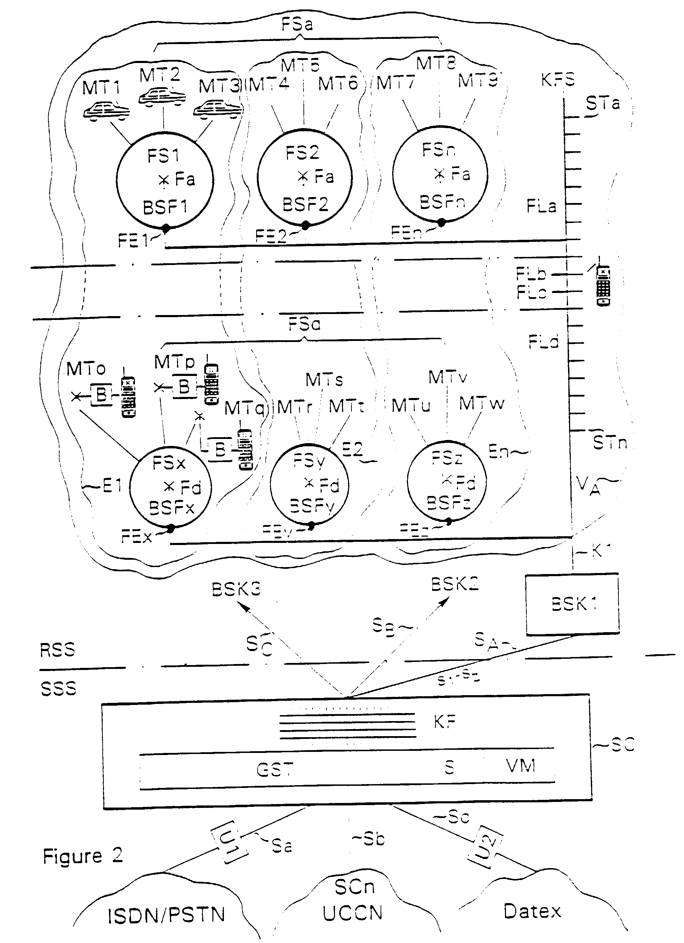

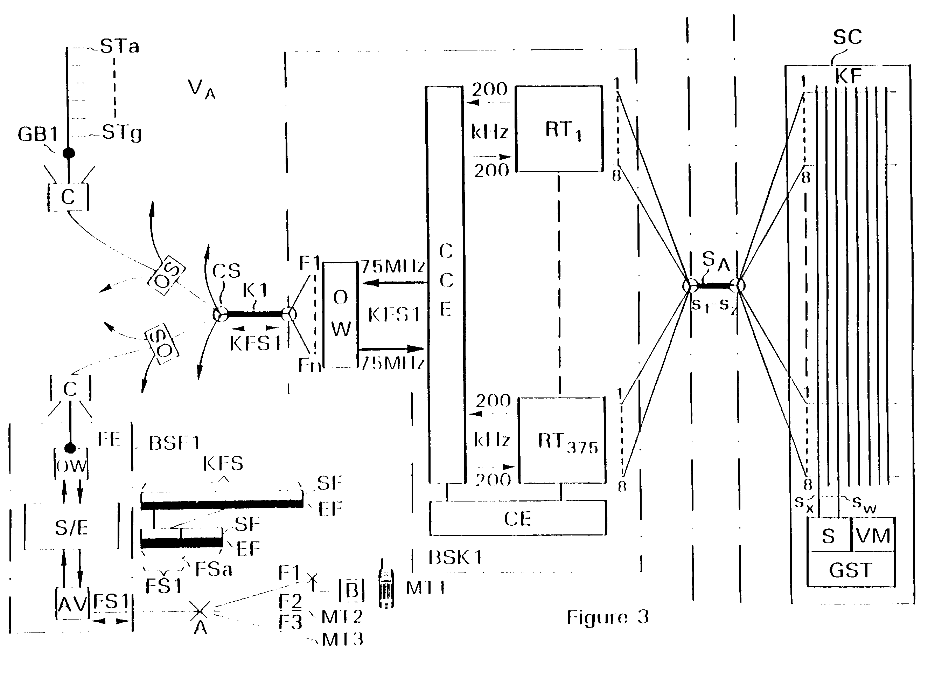

Nachstehend sei die Erfindung anhand der Figuren 2 und 3 näher erläutert. Insgesamt zeigen die Figuren folgendes:
- Fig. 1: das oben erwähnte bekannte mobile Kommunikationssystem;
- Fig. 2: das erfindungsgemäße Fernmeldewählnetz, und zwar als Netz sowohl für mobile Teilnehmer mit mehreren Funkversorgungslayern als auch für stationäre Teilnehmer;
- Fig. 3: Die Struktur der Vermittlungsstelle und das an sie angeschlossene Übertragungsorgan mit dem von diesem versorgten Breitbandkabel und den daran angeschlossenen Teilnehmern sowie die über die Funkbasisstationen angeschlossenen mobilen Teilnehmern.

Die Figur 2 zeigt in der oberen Hälfte den Versorgungsbereich V_{A} eines Fernmeldewählnetzes, das auch weitere Versorgungsbereiche enthalten kann. Ein Versorgungsbereich V_{A} besteht aus einem Funkzugangs-System RSS mit mehreren Funkversorgungslayern FLa-FLd, über die die mobilen Teilnehmer MT1-MT9, MTo-MTw Zugang zu der Vermittlungsstelle SC haben.

Jeder Funkversorgungslayer FLa-FLd arbeitet jeweils in einem eigenen Frequenzband Fa-Fd. Es sei z. B. angenommen. daß der dargestellte Funkversorgungslayer FLa mit relativ hoher Übertragungsleistung im 900 MHz-Band Fa mit einem Funkfrequenzspektrum FSa von 2x25 MHz arbeitet und über relativ große Einzugsbereiche E1, E2-En mobile Teilnehmer MT1-MT9 mit Autotelefon, versorgt, während der Funkversorgungslayer FLd mit relativ geringer Übertragungsleistung im 1.8 GHz-Band Fd mit einem Funkfrequenzspektrum FS_{d} von 2x75 MHz arbeitet und über kleinere Einzugsbereiche mobile Teilnehmer MTₒ-MT_{w} mit Handgeräten (Handhelds), versorgt. Die stationären Teilnehmer STₐ-STₙ des Versorgungsbereichs V_{A} sind über ein bis direkt zu den Teilnehmern verlaufendes Breitbandkabel K1 an die Vermittlungsstelle SC herangeführt.

Zum Verständnis des erfindungsgemäßen Prinzips ist die Tatsache wichtig, daß ein Versorgungsbereich z. B. VA eine relativ große Fläche mit sehr vielen Einzugsbereichen abdeckt und die angeschlossenen stationären Teilnehmer z. B. STₐ-STₙ und die Funkversorgungslayer FLₐ-FL_{d} mit den Einzugsbereichen E₁, E₂-Eₙ räumlich übereinander liegen.

Jeder Funkversorgungslayer FLₐ-FL_{d} eines Versorgungsbereiches besteht aus mehreren Funkbasisstationen BSF1-BSFₙ, BSFₓ -BSF_{z}, die an die Vermittlungsstelle SC über ihre Funkbasisstation-Endgeräte FE₁-FEₙ, FEₓ-FE_{z} jeweils an ein Breitbandkabel, vorzugsweise Glasfaserkabel K1, angeschlossen sind, das sämtliche, diesen Funkbasisstationen zur Verfügung stehenden Kommunikationskanalpaare als Kabelfrequenzspektrum KFS1 überträgt. Die Funkbasisstationen BFS1-BSFn, BFSx-BSFz setzen ein Kommunikationskanalpaar für die Herstellung einer Verbindung jeweils in den Funkfrequenzbereich FS1-FSa, FSx-FSz, der einer Funkbasisstation jeweils zugeordnet ist und einem Anteil des Funkfrequenzspektrums FSa-FSd eines Funkversorgungslayers FLa-FLd entspricht.

Den Breitbandkabeln sind gemeinsame Übertragungsorgane BSK1, BSK2. BSK3 vorgeschaltet, die das Kabelfrequenzspektrum KFS, wie anhand der figur 3 im einzelnen erläutert, generieren, wobei der Frequenzumfang des Kabelfrequenzspektrums KFS so bemessen ist, daß alle von der Vermittlungsstelle SC für diesen Versorgungsbereich bereitgestellten Kommunikationskanalpaare in das Kabelfrequenzspektrum KFS hineinpassen und damit die mobilen Teilnehmer MT1-MT9, MTₒ-MT_{w} gemäß der von der Vermittlungsstelle SC erfolgenden Zuordnung zu allen diesen Kommunikationskanalpaaren Zugang haben.

Die Übertragungsorgane BSK1, BSK2, BSK3 sind in bekannter Weise über Digitalsignalleitungen S_{A}, S_{B}, S_{C} mit dem Koppelfeld KF der Vermittlungsstelle SC verbunden, über die Digital-Kanäle (Kommunikationskanalpaare) s₁-s_{z}, für eine Umsetzung in frequenzmodulierte Funkkanäle in den Übertragungsorganen BSK1, BSK2, BSK3 bereitsgestellt werden.

Selbst wenn für einen Funkversorgungslayer, z. B. FLa, in einem Versorgungsbereich V_{A} ein ausreichendes Funkfrequenzspektrum FSa zur Verfügung stehen würde, um allen Funkbasisstationen BSF1, BSF2-BFSₙ einen entsprechend ihrer Spitzenverkehrsbelastung ausreichenden Funkfrequenzbereich FS1, FS2-FSn, wie heute üblich, fest zumteilen, bietet die erfindungsgemäße Schaltungsanordnung. Gegenüber dem in Figur 1 erläuterten bekannten Verfahren bereits enorme Vorteile, die anhand eines Beispiels erläutert werden:

Es sei angenommen, daß der Funkversorgungslayer FLa im Frequenzband 900 MHz mit einem Funkfrequenzspektrum FSa von 2x25 MHz arbeitet, was 1000 Kommunikationskanalpaaren entspricht (1 Kommunikationskanal belegt 25 kHz im Funkfrequenzspektrum). Es sei weiter angenommen, daß dieser Versorgungsbereich ein Stadtgebiet einschließlich der Randzonen abdeckt und aus 7 Einzugsbereichen E1-E7 besteht. Die Spitzenverkehrsbelastung der einzelnen Einzugsbereiche (Funkbasisstationen) sei wie folgt:

| | | | |
|---|---|---|---|
| E1 | 50 Erlang | 66 Sprachkanalpaare | 1,65 MHz |
| E2 | 70 Erlang | 88 Sprachkanalpaare | 2,2 MHz |
| E3 | 150 Erlang | 174 Sprachkanalpaare | 4,35 MHz |
| E4 | 250 Erlang | 276 Sprachkanalpaare | 6,9 MHz |
| E5 | 200 Erlang | 228 Sprachkanalpaare | 5,7 MHz |
| E6 | 20 Erlang | 32 Sprachkanalpaare | 0,8 MHz |
| E7 | 80 Erlang | 100 Sprachkanalpaare | 2,5 MHz |
| Summe | 820 Erlang | 964 Sprachkanalpaare | 24,1 MHz |

Wie eingangs erläutert, unterliegt der Spitzenverkehr, vergleichbar mit dem Straßenverkehr, für den mobilen Netzzugang großen räumlichen und zeitlichen Schwankungen. Erfahrungsgemäß ist die Summe des maximalen Gesamtverkehrs in einem Versorgungsbereich manchmal kleiner 50% der Summe der einzelnen Verkehrsspitzen in den Einzugsbereichen E1-E7 in diesem Versorgungsbereich. Im Beispiel sei angenommen daß der maximale Summenverkehr 70% der einzelnen Verkehrsspitzen der Einzugsbereiche E1-E7 betrage, d. h. 820x0,7 = 574 Erlang. Um diesen Verkehr bei einem zugelassnen Verlust von 0,5 % bedienen zu können, reichen 612 Kommunikationskanalpaare, d. h. es können, selbst wenn das erfindungsgemäße Verfahren nur für einen einzigen Funkversorgungslayer angewendet würde, 964-612 = 352 Umsetzeinrichtungen und 352 Anschlüse am Koppelfeld der Vermittlungsstelle zusätzlich zu den wesentlich geringeren Anschlußkosten des Breitbandkabels eingespart werden.

Über die Lebensdauer eines solchen Netzes muß mit Verkehrsverschiebungen gerechnet werden. Die gemeinsame Steuerung GST der Vermittlungsstelle SC, die im wesentlichen die Einstellung des Kopelfeldes KF steuert, ist durch die Steuereinrichtung S ergänzt, die in allen Funkbasisstationen als Bestandteil der Funkbasisstation-Endgeräte FE vorhandene Sende/Empfangseinrichtungen S/E über Signalisierungskanäle so steuern kann, daß die Zuordnung der Funkkanäle (Kommunikationskanalpaare) hinsichtlich ihrer Anzahl und Frequenzlage im Funkfrequenzbereich FS1-FSn geändert werden kann, was in einfacher Weise eine Anpassung an eine solche, veränderte Verkehrslage z. B. Wochenend-Verkehrssituation/Werktags-Verkehrssituation, ermöglicht.

Mit wachsender Teilnehmerzahl mobiler Fernmeldewählnetze sind aber gerade die verfügbaren Funkfrequenzbereiche der eigentliche Engpaß. In einer weiteren Ausgestaltung der Erfindung wird die erwähnte Steuereinrichtung S mit einer die momentane Verkehrsbelastung aller Funkbasisstationen (Einzugsbereiche) eines Versorgungsbereiches ermittelnde Verkehrsmeßeinrichtung VM versehen, die der Steureinrichtung S die Verkehrsbelastung repräsentierende Belastungssignale übermittelt. Da die Steuereinrichtung S die örtliche Lage der einzelnen Funkzellen kennt, ist sie in der Lage, unter Berücksichtigung der sich nicht beeinflussenden Frequenzbereiche gegenüber Nachbar-Funkzellen, die Funkfrequenzbereiche FS1, FS2-FSn so zu vergrößern bzw. zu verkleinern, daß jede Funkbasisstation über so viele Funkkanäle verfügt, daß sie gerade der jeweiligen Verkehrslage in ihrem Einzugsbereich gerecht werden kann.

Wie das angegebene Beispiel zeigt, kann damit der Nutzungsgrad eines vorgegebenen Funkfrequenzspektrums FSa-FSd z. B. um den Faktor 1,5-2 verbessert werden.

Das Fernmeldewählnetz, bestehend aus Versorgungsbereichen mit dem Funkzugangs-System RSS und den stationären Teilnehmern STa-STn bildet in einer Fläche übereinander liegende Netzzugänge. wobei die weitaus größten Verkehrsanteile nach wie vor von und zu den an das leitungsgebunde, stationäre Netz angeschlossenen Teilnehmer STa-STn fließen. Wie eingangs erläutert, liegen die Verkehrsspitzenzeiten im stationären Netz und im Funkzugangs-System zeitlich nebeneinander und die zunehmende Benutzung des Funktelefons führt außerdem zu einer Abflachung der Verkehrsspitzen im stationären Netz. Es ist also äußerst vorteilhaft, den mobilen und stationären Teilnehmern zu den gleichen Kommunikationskanalpaaren Zugang zu geben, weil sich dadurch die Gesamtzahl der Umsetzeinrichtungen und die Zahl der Anschlüsse an der Vermittlungsstelle SC noch einmal erheblich reduzieren läßt. Wie die Figur 2 zeigt, wird das dadurch erreicht, daß an das Breitbandkabel z. B K1 außer den Funkbasisstationen BSF1-BSFn, BSFx-BSFz zusätzlich die stationären Teilnehmer STa-STn angeschlossen sind, die nun ebenfalls zu dem gleichen Kabelfrequenzspektrum KFS und damit zu allen von der Vermittlungsstelle SC über das Breitbandkabel K1 zur Verfügung gestellten Kommunikationskanalpaaren funktionell in gleicher Weise wie die mobilen Teilnehmer Zugriff haben.

Ein Funkzugangs-System RSS mit mehreren Funkzugangslayern FLa-FLd, so wie es in der Figur 2 gezeigt ist, wird auch als Multilayer Funkversorgung bezeichnet, wenn diese ein einheitliches, gemeinsames Fernmeldewählnetz bilden, d. h. innerhalb eines Versorgungsbereiches an die gleiche Vermittlungsstelle SC angeschlossen sind. Eine solche Schaltungsanordnung bietet den Vorteil, daß für den stationären Netzzugang und alle mobilen Netzzugänge in den verschiedenen Funkversorgungslayern FLa-FLd in der Summe nur noch so viele Kommunikationskanalpaare für einen Versorgungsbereich z. B. V_{A} vorgesehen werden müssen wie für die Verkehrsabwicklung der gleichzeitigen Verkehrsspitze aller Einzugsbereiche in den einzelnen Funkversorgungslayern und im stationären Netzzugang erforderlich sind. Eine solche Anordnung bietet also langfristig die optimalsten Möglichkeiten zur effizienten Nutzung aller Funkfrequenzspektren in den Frequenzbändern der Funkversorgungslayer sowie ein Minimum an Kosten für die Umsetzeinrichtungen und Anschlußschaltungen am Koppelfeld der Vermittlungsstelle, als auch für die Verkabelung der stationären Teilnehmer und die Funkbasisstationen.

Durch die Verwendung von sogenannten Booster B in Automobilen und für Handgeräte, die eine Anpassung an die in den einzelnen Funkversorgungslayern benutzten Übertragungspegel und Frequenzbänder vornehmen, können im gesamten Netz einheitliche Teilnehmerendgeräte verwendet werden, die z. B. in Gebäuden am stationären Netzzugang ohne Zusatzeinrichtung mit Anschlußschnur oder einem Funk-Interface geringer Übertragungsleistung verwendet werden können.

Der Vollständigkeit halber zeigt die Figur 2 noch das Vermittlungs-Sub System SSS und die Zusammenschaltung der Vermittlungsstelle SC mit den heute vorhandenen ISDN/PSTN-Vermittlungsnezte über die Digitalsignalleitungen Sₐ und die Anpassungseinrichtungen U1, sowie an die Text- und Datennetze (Datex) über die Digitalsignalleitungen S_{c} und die Anpassungseinreichtungen U2 und die Anschaltung an weitere Vermittlungsstellen SCₙ eines neuen, einheitlichen, gmeinsamen Fernmeldewählnetzes UCCN über die Digitalsignalleitungen S_{b} ohne Anpassungseinrichtungen, da die Kodierungs-, Vermittlungs- und Übertragungsverfahren in diesem Netz einheitlich sind und eine Anpassung nicht mehr erforderlich ist.

Die Figur 3 zeigt schaltungstechnische Einzelheiten der Vermittlungsstelle SC, des Übertragungsorgans BSK1, der Funkbasisstation BSF1, des Breitbandkabels K1 und der stationären Netzzugänge STa-STg, soweit sie für das erfindungsgemäße Verfahren von Bedeutung sind.

In einem typischen Anwendungsfall werden in einem Versorgungsbereich V_{A} z. B. 3000 Kommunikationskanalpaare von dem Koppelfeld KF der Vermittlungsstelle SC als Digital-Kanäle/Kanalpaare S₁-S_{z} über die Digitalsignalleitung S_{A} an das Übertragungsorgan BSK1 herangeführt. In dem Bündel der Digital-Kanäle/Kanalpaare sind mehrere, gemeinsame Signalisierungskanäle Sₓ-S_{w} enthalten, die über das Koppelfeld KF mit der Steuereinrichtung S und der gemeinsamen Steuerung GST verbunden sind.

Das Übertragungsorgan BSK1 besteht im wesentlichen aus den Umsetzeinrichtungen RT₁-RT 375, die die Digital-Kanäle/Kanalpaare S₁-Sz_{Z} in Gruppen zu je 8 Kanalpaaren umsetzen und im FDMA/TDMA (Frequency Division Multiple Access/Time Division Multiple Access)-Verfahren umsetzen und als Einzelkfrequenzbereiche von je 2x200 kHz der Kabel Koppel Einrichtung CCE anbieten, die das Kabelfrequenzspektrum KFS1 mit 2x75 MHz zusammensetzt, das über den Opto-Elektronischen Wandler OW in das Breitbandkabel K1 eingespeist wird.

Das Breitband-Glasfaserkabel K1 besteht aus mehreren Fasern F1-Fn, die über Kabel-Splitter CS, Optische Energie Teiler OS und Straßenrand-Verteiler C in Form einer Baumkabel Verteilung eine optimale Verteilung des Kabelfrequenzspektrums über die gesamte Fläche des Versorgungsbereiches ermöglichen.

Die Figur 3 zeigt am Beispiel der Funkbasisstation BSF1 den Anschluß mobiler Teilnehmer MT1-MT3 und über den Gebäudebooster (wie üblicherweise in Gemeinschaftsantennenanlagen verwendet) GB1 den Anschluß stationärer Teilnehmer STa-STg.

Das Funkbasisstaion-Endgerät FE verfügt über einen Opto-Elektronischen Wandler OW, der das gesamte Kabelfrequenzspektrum KFS1 am Eingang der Sende/Empfangseinreichtung S/E, bestehend aus 3000 Sendefunkkanälen SF und 3000 Empfangsfunkkanäeln EF, bereitsstellt.

Die gemeinsamen Signalisierungskanäle sx-sw liegen grundsätzlich in einer festen Frequenzlage und sind deshalb der S/E zugänglich, so daß zwischen der Steuereinrichtung S und der gemeinsamen Steuerung GST der Vermittlungsstelle SC einerseits und der Sende/Empfangseinrichtung S/E der Funkbasisstation Endgeräte FE andererseits Steuerinformationen ausgetauscht werden können.

Mit diesen Steuerinformationen steuert die Vermittlungsstelle SC
- die Lage und Größe der Funkfrequenzbereiche FS1-FSn innerhalb des Funkfrequenzspektrums FSa des Funkversorgungslayers FLa,
- die Zuordnung der Funkkanäle des Kabelfrequenzspektrums KFS1 in den Funkfrequenzbereich z. B. FS1.

Der auf diese Weise generierte Funkfrequenzbereich, z. B. FS1, wird am Ausgang der Sende/Empfangseinrichtung E/S in das Frequenzband z. B. 900 MHz transformiert, wobei die Sendefunkkanäle SF z. B. im unteren Seitenband und die Empfangsfunkkanäle EF im oberen Seitenband liegen. Über den Antennenverstärker AV werden die Funkkanalpaare innerhalb des Funkfrequenzbereiches ausgesendet und empfangen. Jeder mobile Teilnemer MT1-MT3 hat also zu allen Kommunikationskanalpaaren, wenn auch zeitlich zu jeweils nur einer begrenzten Anzahl über die Funkwege F1, F2, F3 Zugang. Auch im Funkfrequenzbereich z. B. FS1 sind gemeinsame Signalisierungskanalpaare enthalten, über die die Gemeinsame Steuerung GST der Vermittlungsstellen SC im Falle einer Verbindung in den Endgeräten der Teilnehmer MT1-MT3 vorhandene schaltbare Kanalfilter einstellt und auf diese Weise letztendlich die individuelle Zuordnung eines Kommunikationskanalpaars vom Teilnehmer MT1-MT3 über die im Funkfrequenzbereich FS1 verlaufende Funkkanalpaare, die Umsetzung in der Sende/Empfangseinrichtung S/E in das Kabelfrequenzspektrum KFS1 und über eines der hier verlaufenden Funkkanalpaare des Breitbandkabels K1 und die Umsetzeinrichtungen RT₁-RT₃₇₅ des Übertragunsorgans BSK1, die Digitalsignalleitungen SA bis zu einem bestimmten Anschlußpunkt des Koppelfeldes KF der Vermittlungsstelle SC durchschaltet.

Die stationären Teilnehmer STa-STg haben in funktionell gleicher Weise Zugang zur Vermittlungsstelle SC, wobei allerdings der Gebäudebooster GB1 das gesamte Kabelfrequenzspektrum KFS1 ohne Begrenzung der Funkkanalpaare den Teilnehmern STa-STg zugänglich macht.

Die Kontrolleinrichtung CE versorgt die RT und CCE mit den für die Modulation/Demodulation notwendigen Taktfrequenzen.

## Patentansprüche

1. Schaltungsanordnung für Fernmeldewählnetze, vorzugsweise Fernsprechwählnetze, mit mindestens einer Vermittlungsstelle (SC), zu der mobile Teilnehmer (MT1-MTw) und stationäre Teilnehmer (STa-STn) Zugang haben und sowohl den mobilen als auch den stationären Teilnehmern (MT1-MTw; STa-STn) jeweils eine individuelle Kennung zugeordnet ist, mit der sich der Teilnehmer meldet (Kennungssignal) und damit von der Vermittlungsstelle (SC) identifiziert und lokalisiert wird, wonach im Falle eines Verbindungswunsches von der Vermittlungsstelle (SC) dem Teilnehmer (MT1-MTw) für die Herstellung einer Verbindung vom Teilnehmer zur Vermittlungsstelle (SC) bzw. umgekehrt ein Kommunikationskanalpaar zugeordnet wird, wobei die Zugänge der stationären Teilnehmer (STa-STn) über mindestens ein direkt zu den Teilnehmern reichendes Breitbandkabel (K1), vorzugsweise Glasfaserkabel, verläuft, das von der Vermittlungsstelle (SC) bis zu den stationären Teilnehmerendgeräten (STa-STn) ohne Vermittlungsfunktion und ohne Zwischenschaltung von teilnehmerindividuellen Drahtleitungen reicht und über die die gleiche Signalisierung (Kennungssignal), Kanalzuordnung (Kommunikationskanalpaar) und Nachrichtenübertragung derart erfolgt, daß jeder Teilnehmer, unabhängig davon ob mobil oder stationär, von der Vermittlungsstelle (SC) funktionell in gleicher Weise über ein Kommunikationskanalpaar erreicht wird, **dadurch gekennzeichnet,** daß an das Breitbandkabel (K1) außer den stationären Teilnehmern (STa-Stn) zusätzlich Funkbasisstationen (BSF1-BSFn,BSFx-BSFz) der mobilen Teilnehmer (MT1-MTw) angeschlossen sind, die ebenfalls zu allen von der Vermittlungsstelle (SC) über das Breitbandkabel (K1) zur Verfügung gestellten Kommunikationskanalpaaren funktionell in gleicher Weise wie die stationären Teilnehmer (STa-STn) Zugang haben, wobei an das Breitbandkabel (K1) die Funkbasisstationen (BSF1-BSFz) jeweils über Funkbasisstation-Endgeräte (FE1-FEz) angeschlossen sind, die das jeweilige Kommunikationskanalpaar in den Funkfrequenzbereich (FS1-FSz) der betreffenden Funkbasisstation (BSF1-BSFz) umsetzen, und dem Breitbandkabel (K1) ein gemeinsames Übertragungsorgan (BSK1) mit einem Frequenzumfang vorgeschaltet ist, das die in der Vermittlungsstelle (SC) bereitgestellten Kommunikationskanalpaare in ein sämtliche Kommunikationskanalpaare sowohl der stationären (STa-STn) als auch der mobilen Teilnehmer (MT1-MTw) umfassendes Kabelfrequenzspektrum (KFS) umsetzt und umgekehrt.

2. Schaltungsanordnung nach Anspruch 1, **dadurch gekennzeichnet,** daß an das Breitbandkabel (K1) mehrere Gruppen von Funkbasisstationen (BSF1-BSFn, BSFx-BSFz) angeschiossen sind, derer Funkkanäle jeweils in unterschiedlichen Frequenzbändern (Funkfrequenzlayer Fa-Fd) liegen.

3. Schaltungsanordnung nach Anspruch 1 oder 2, **dadurch gekennzeichnet,** daß der Vermittlungsstelle (SC) eine Steuereinrichtung (S) zugeordnet ist, die aus den einer Gruppe von Funkbasisstationen (z.B. BSF1-BSFn) zur Verfügung stehenden Funkkanälen, die über in diesen Funkbasisstationen (BSF1-BSFn) vorgesehene Sende-/Empfangseinrichtungen (S/E) übertragen werden, ausgewählte Funkkanäle jeweils einer Funkbasisstation (BSF1-BSn) zuordnet und diese Zuordnung hinsichtlich Anzahl und jeweiliger Frequenzlage der einzelnen Funkkanäle speichert, wobei die Steuereinrichtung (S) diese Zuordnung wahlweise veränderbar in jeder Funkbasisstation (BSF1-BSFn) durch Aktivierung der betreffenden Sende-/Empfangseinrichtungen (S/E) festlegt.

4. Schaltungsanordnung nach Anspruch 3, **dadurch gekennzeichnet,** daß die Steuereinrichtung (S) eine die momentane Verkehrsbelastung einer Gruppe von Funkbasisstationen (z.B. BSF1-BSFn) ermittelnde Verkehrsmeßeinrichtung (VM) enthält, die der Steuereinrichtung (S) die Verkehrsbelastung repräsentierende Belastungssignale übermittelt, wobei die Steuereinrichtung (S) bei der Zuordnung der einzelnen Funkkanäle die örtliche Lage dieser Funkbasisstationen (BSF1-BSFn) durch Verknüpfung der Belastungssignale mit Interferenzindikatoren, die einander sich störende Funkkanäle angeben, berücksichtigt.

5. Schaltungsanordnung nach einem der Ansprüche 1 bis 4, **dadurch gekennzeichnet,** daß die mobilen Teilnehmer (MT1-MTw) und die stationären Teilnehmer (STa-STn) mit einheitlichen Teilnehmerendgeräten versehen sind.

## Claims

1. Circuit arrangement for public switched networks, preferably public telephone networks, in which mobile subscribers (MT1-MTw) and stationary subscribers (STa-STn) have access to at least one exchange (SC), with both the mobile and also the stationary subscribers (MT1-MTw; STa-STn) each being assigned an individual identification, with which identification the subscriber answers (identification signal) and is thus identified and located by the exchange (SC), whereafter, in the event of a call request, for the establishment of a connection from the subscriber to the exchange (SC) or vice versa, a communication-channel pair is assigned to the subscriber (MT1-MTw) by the exchange (SC), with the access of the stationary subscribers (STa-STn) being by means of at least one broad-band cable (K1), preferably a fibre-optic cable, said broad-band cable (K1) extending directly to the subscribers and extending from the exchange (SC) to the stationary-subscriber terminals (STa-STn) without call-processing function and without the intermediate connection of subscriber-specific wires and through which cables there is the same signalling (identification signal), channel assignment (communication-channel pair) and message transmission such that each subscriber, irrespective of whether mobile or stationary, is reached functionally in identical manner by the exchange (SC) through a communication-channel pair, characterized in that
additionally connected to the broad-band cable (K1), apart from the stationary subscribers (STa-STn), are radio base stations (BSF1-BSFn,BSFx-BSFz) of the mobile subscribers (MT1-MTw), said radio base stations (BSF1-BSFn,BSFx-BSFz) likewise having access, functionally in identical manner to the stationary subscribers (STa-STn), to all communication-channel pairs made available by the exchange (SC) through the broad-band cable (K1), with the radio base stations (BSF1-BSFz) each being connected to the broad-band cable (K1) through the intermediary of radio-base-station terminals (FE1-FEz), said radio-base-station terminals (FE1-FEz) converting the respective communication-channel pair to the radio-frequency range (FS1-FSz) of the radio base station (BSF1-BSFz) in question, with a common transmission element (BSK1) with a frequency coverage being connected before the broad-band cable (K1), said common transmission element (BSK1) converting the communication-channel pairs made available in the exchange (SC) to cable-frequency spectrum (KFS) encompassing all communication-channel pairs both of the stationary (STa-STn) and also of the mobile subscribers (MT1-MTw), and vice versa.

2. Circuit arrangement according to claim 1, characterized in that a plurality of groups of radio base stations (BSF1-BSFn, BSFx-BSFz) is connected to the broad-band cable (K1), the radio channels of said radio base stations (BSF1-BSFn, BSFx-BSFz) each being situated in different frequency bands (radio-frequency layers Fa-Fd).

3. Circuit arrangement according to claim 1 or 2, characterized in that the exchange (SC) is assigned a control apparatus (S), with - out of the radio channels available to a group of radio base stations (e.g. BSF1-BSFn), said radio channels being transmitted through the intermediary of transmitting/receiving apparatuses (S/E) provided in said radio base stations (BSF1-BSFn) - selected radio channels each being assigned by said control apparatus (S) to a radio base station (BSF1-BSn), with said control apparatus (S) storing said assignment with regard to the number and respective frequency position of the individual radio channels and fixing said assignment in optionally variable manner in each radio base station (BSF1-BSFn) by activation of the relevant transmitting/receiving apparatuses (S/E).

4. Circuit arrangement according to claim 3, characterized in that the control apparatus (S) comprises a traffic-measuring apparatus (VM), said traffic-measuring apparatus (VM) determining the instantaneous traffic load on a group of radio base stations (e.g. BSF1-BSFn) and communicating to the control apparatus (S) the load signals representing the traffic load, with the control apparatus (S), in assigning the individual radio channels, taking account of the geographical location of said radio base stations (BSF1-BSFn) by logically combining the load signals with interference indicators, said interference indicators indicating mutually interfering radio channels.

5. Circuit arrangement according to any one of claims 1 to 4, characterized in that the mobile subscribers (MT1-MTw) and the stationary subscribers (STa-STn) are provided with uniform subscriber terminals.

## Revendications

1. Montage pour des réseaux de sélection de télécommunications, notamment des réseaux de sélection téléphonique, comportant au moins un central (SC) auquel ont accès des abonnés mobiles (MT1-MTw) et des abonnés fixes (STa-STn), et dans lequel aussi bien aux abonnés mobiles qu'aux abonnés fixes (MT1-MTw, STa-STn) est associé respectivement un indicatif individuel, au moyen duquel l'abonné se signale (signal d'indicatif) et par conséquent est identifié et localisé par le central (SC), à la suite de quoi dans le cas d'un souhait de liaison à partir du central (SC), un couple de canaux de commnication est associé à l'abonné (MT1-MTw) pour l'établissement d'une liaison de l'abonné en direction du central (SC) ou inversement, les accès des abonnés fixes (STa-STn) s'effectuant par l'intermédiaire d'au moins un câble à large bande (K1), de préférence un câble à fibres de verre, qui s'étend directement jusqu'aux abonnés et qui s'étend depuis le central (SC) jusqu'aux terminaux fixes d'abonnés (STa-STn) sans fonction de commutation et sans montage intercalé de lignes formées de fils, prévues individuellement pour les abonnés, au moyen duquel la même signalisation (signal d'indicatif), la même association de canaux (couple de canaux de communication) et la même transmission d'informations s'effectuent de telle sorte qu'indépendamment du fait qu'il soit mobile ou fixe, chaque abonné est atteint fonctionnellement à partir du central (SC) de la même manière par l'intermédiaire d'un couple de canaux de communication, caractérisé en ce qu'au câble à large bande (K1) sont en outre raccordés, en plus des postes fixes (STa-STn), des postes hertziens de base (BSF1-BSFn, BSFx-BSFz) des abonnés mobiles (MT1-MTw), qui ont également accès fonctionnellement, de la même manière que les abonnés fixes (STa-STn), à tous les couples de canaux de communication, que le central (SC) met à disposition par l'intermédiaire du câble à large bande (K1), et les postes hertziens de base (BSF1-BSFz) étant raccordés au câble à large bande (K1) respectivement par l'intermédiaire de terminaux (FE1-FEz) des postes hertziens de base, qui amènent par conversion le couple respectif de canaux de communication dans la gamme des fréquences radio (SF1-SFz) du poste hertzien de base concerné (BSF1-BSFz), alors qu'en amont du câble à large bande (K1) est branché un organe de transmission commun (BSK1) possédant une gamme de fréquences, qui amène par conversion les couples de canaux de communication, mis à disposition dans le central (SC), dans un spectre de fréquences (KFS) du câble, qui englobe tous les couples de canaux de communication aussi bien des abonnés fixes (STa-STn) que des abonnés mobiles (MT1-MTw) et inversement.

2. Montage selon la revendication 1, caractérisé en ce qu'au câble à large bande (K1) sont raccordés plusieurs groupes de postes hertziens de base (BSF1-BSFn, BSFx-BSFz), dont les canaux hertziens sont situés respectivement dans des bandes différentes de fréquences (tranches de fréquences hertziennes FA-Fd).

3. Montage selon la revendication 1 ou 2, caractérisé en ce qu'au central (SC) est associé un dispositif de commande (S), qui associe les canaux hertziens, qui sont mis à la disposition d'un groupe de postes hertziens de base (par exemple BSF1-BSFn) et sont transmis par l'intermédiaire de dispositifs d'émission/de réception (S/E) prévus dans ces postes hertziens de base (BSF1-BSFn), respectivement à un poste hertzien de base (BSF1-BSFn) et mémorise cette association en ce qui concerne le nombre et la position de fréquence respective des différents canaux hertziens, le dispositif de commande (S) fixant cette association de manière qu'elle puisse être modifiée au choix dans chaque poste hertzien de base (BSF1-BSFn) par activation des dispositifs d'émission/de réception (S/E) concernés.

4. Montage selon la revendication 3, caractérisé en ce que le dispositif de commande (S) contient un dispositif de mesure de trafic (VM), qui détermine la charge instantanée en trafic d'un groupe de postes hertziens de base (par exemple BSF1-BSFn) et qui retransmet des signaux de charge représentant la charge en trafic, au dispositif de commande (S), le dispositif de commande (S) prenant en compte, lors de l'association des différents canaux hertziens, la position locale de ces postes hertziens de base (BSF1-BSFn) par combinaison des signaux de charge avec des indicateurs d'interférences, qui indiquent des canaux hertziens qui se perturbent réciproquement.

5. Montage selon l'une des revendications 1 à 4, caractérisé en ce que les abonnés mobiles (MT1-MTw) et les abonnés fixes (STa-STn) sont équipés de terminaux identiques d'abonnés.
